# EUROPÄISCHE PATENTSCHRIFT

(11) **EP 3 704 001 B1**
(45) Veröffentlichungstag und Bekanntmachung des Hinweises auf die Patenterteilung: **23.11.2022**
(21) Anmeldenummer: 18732009.8
(22) Anmeldetag: 12.06.2018
(51) Int. Cl.: B62D 65/18

(54) **VERFAHREN UND FERTIGUNGSANLAGE ZUR HERSTELLUNG VON FAHRZEUGEN UND OBERFLÄCHENBEHANDLUNGSANLAGE ZUR OBERFLÄCHENBEHANDLUNG VON FAHRZEUGKAROSSERIEN**
METHOD AND PRODUCTION FACILITY FOR PRODUCING VEHICLES, AND SURFACE TREATMENT SYSTEM FOR TREATING THE SURFACE OF VEHICLE BODIES
PROCÉDÉ ET INSTALLATION DE PRODUCTION DE VÉHICULES ET INSTALLATION DE TRAITEMENT DE SURFACE DE CARROSSERIES DE VÉHICULE

(30) Priorität: 19.06.2017 DE 102017113343
(43) Veröffentlichungstag der Anmeldung: 09.09.2020
(73) Patentinhaber: Eisenmann GmbH, 71032 Böblingen (DE)
(72) Erfinder: VON KRAULAND, Matthias, 3780 Gstaad (CH)
(74) Vertreter: Ostertag & Partner Patentanwälte mbB
(86) Internationale Anmeldenummer: PCT/EP2018/065528
(87) Internationale Veröffentlichungsnummer: WO 2018/234105

(56) Entgegenhaltungen:
- EP-A1- 2 335 997
- EP-A1- 2 839 886
- WO-A1-2013/069420
- WO-A1-2016/180516
- DE-U1-202015 100 782

## Beschreibung

Die Erfindung betrifft ein Verfahren zur Herstellung von Fahrzeugen, bei welchem Fahrzeugkarosserien für die Durchführung von mehreren Arbeitsschritten durch mehrere Behandlungseinrichtungen gefördert werden, wobei bei zwei aufeinanderfolgenden Arbeitsschritten Arbeiten unterschiedlicher Art an den Fahrzeugkarosserien durchgeführt werden.

Außerdem betrifft die Erfindung eine Oberflächenbehandlungsanlage zur Oberflächenbehandlung von Fahrzeugkarosserien mit mehreren Behandlungseinrichtungen.

Darüber hinaus betrifft die Erfindung eine Fertigungsanlage zur Herstellung von Fahrzeugen mit einer Oberflächenbehandlungsanlage.

Nachdem Fahrzeugkarosserien in einer Rohbauanlage aus Einzelteilen zusammengefügt wurden und in einer Korrosionsschutzanlage insbesondere durch eine kataphoretische Tauchlackierung einen Korrosionsschutz erhalten haben, werden sie vor dem Erreichen einer Endmontageanlage in einer Oberflächenbehandlungsanlage einer Oberflächenbehandlung unterzogen, welche insgesamt verhältnismäßig viele einzelne Behandlungsschritte umfasst und in der Regel mit dem Trocknen der kataphoretischen Tauchlackierung beginnt. In der Rohbauanlage werden somit Arbeiten an Fahrzeugkarosserie-Vorstufen, nämlich den einzelnen Phasen beim Zusammenfügen der Fahrzeugkarosserie, durchgeführt, während in der Endmontageanlage somit Arbeiten an Fahrzeugkarosserie-Nachstufen, nämlich den einzelnen Phasen beim Montieren von Komponenten und Bauteilen in und an der fertiggestellten Fahrzeugkarosserie, durchgeführt werden. Vorliegend fallen sowohl solche Fahrzeugkarosserie-Vorstufen als auch solche Fahrzeugkarosserie-Nachstufen unter den Begriff Fahrzeugkarosserie. Bezogen auf den Rohbau können also schon das erste Blechteil und alle dazwischenliegenden Aufbaustrukturen bis zur endgültigen Fahrzeugkarosserie als Fahrzeugkarosserie verstanden werden.

Infolgedessen erfolgen in einer Anlage zur Herstellung für Fahrzeugkarosserien viele verschiedene Arbeitsschritte, die von den Fahrzeugkarosserien in einer bestimmten Abfolge durchlaufen werden müssen und in denen Arbeiten unterschiedlicher Art an den Fahrzeugkarosserien durchgeführt werden. Zu solchen Arbeiten zählen sowohl Maßnahmen, bei denen aktiv auf die Fahrzeugkarosserie eingewirkt wird oder diese verändert oder ergänzt werden, wie beispielsweise beim Zusammenfügen von Einzelteilen im Rohbau oder der Endmontage, bei einer Applikation von Material oder dem Trocknen der Fahrzeugkarosserien, als auch Maßnahmen, bei denen keine aktive Einwirkung auf die Fahrzeugkarosserie erfolgt, wie beispielsweise ein Audit oder ein Abdunsten der Fahrzeugkarosserie. In der Oberflächenbehandlungsanlage werden die Fahrzeugkarosserien im Rahmen solcher Arbeiten in den unterschiedlichen Anlagenzonen auf unterschiedliche Art behandelt.

Für alle Arbeitsschritte gibt es Arbeitseinrichtungen, mit oder in denen die entsprechenden Arbeiten ausgeführt werden. In der Oberflächenbehandlungsanlage sind solche Arbeitseinrichtungen entsprechend als Behandlungseinrichtungen ausgebildet.

Beispielsweise beschreibt die WO 2016/180516 A1 eine solche Behandlungseinrichtung innerhalb einer Oberflächenbehandlungsanlage in Form einer Temperiervorrichtung zum Temperieren von Fahrzeugkarosserien; diese werden auf schienengebundenen Transportwagen gefördert. Die DE 20 2015 100 782 U1 beschreibt eine Anlage für den Rohbau von Fahrzeugkarosserien.

Bei einer Rohbauanlage werden in verschiedenen Arbeitsschritten zum Beispiel Blechteile auf unterschiedliche Art und Weise miteinander verbunden.

Bei einer kataphoretischen Tauchbehandlung für den Korrosionsschutz in der Korrosionsschutzanlage kann nur ein Arbeitsschritt durchgeführt werden. Die Behandlung insgesamt für den Korrosionsschutz umfasst in der Regel mehrere Arbeitsschritte auch dann, wenn eine kataphoretischen Tauchbehandlung für den Korrosionsschutz durchgeführt wird. Weitere solche Arbeitsschritte sind beispielsweise Vorbehandlungen, die ebenfalls durch Tauchverfahren durchgeführt werden können. Es können, abhängig von Techniken, die zum Aufbringen eines Korrosionsschutzes gewählt werden und keine Tauchbehandlung oder keine alleinige Tauchbehandlung sind, ebenfalls mehrere Arbeitsschritte notwendig sein.

Die verschiedenen Arbeitsschritte in der Oberflächenbehandlungsanlage können im Wesentlichen in Applikationsschritte, Temperierschritte und Funktionsschritte unterteilt werden, wobei für die einzelnen Arbeitsschritte in der Oberflächenbehandlungsanlage ein oder mehrere Behandlungseinrichtungen notwendig und vorgesehen sein können.

Bei den Applikationsschritten werden die Fahrzeugkarosserien mit einer Beschichtung oder einem Material versehen. Zum Beispiel zählen hierzu die Applikation von Füller, Basislack oder Decklack, oder das Aufbringen von Material für den Unterbodenschutz oder von Material zum Nahtabdichten und Dämmmaterial.

Bei den Temperierschritten werden die Fahrzeugkarosserien temperiert. Unter "Temperieren" einer Fahrzeugkarosserie ist die Herbeiführung einer bestimmten Temperatur der Fahrzeugkarosserie gemeint, die diese zunächst noch nicht besitzt.

Es kann sich um eine Temperaturerhöhung oder eine Temperaturverringerung handeln. Auch das Abdunsten einer Fahrzeugkarosserie zählt vorliegend als eine Behandlung im Rahmen eines "Temperierens".

Bei den Funktionsschritten erfolgen Maßnahmen, welche den Gesamtprozess und den Gesamtablauf unterstützen. Zum Beispiel zählen hierzu die Durchführungen von Audits und gegebenenfalls das Nachbearbeiten von Oberflächenbereichen der Fahrzeugkarosserie, die nicht dem geforderten Qualitätsstandard entsprechen. Einen anderen Funktionsschritt bildet zum Beispiel die Maßnahme, Fahrzeugkarosserien in einer Speichereinrichtung zwischenzulagern und/oder vorzuhalten.

In einer Endmontageanlage werden entsprechend verschiedene Arbeitsschritte durchgeführt, die zur Montage des Fahrzeugs nach der Oberflächenbehandlung der Fahrzeugkarosserie notwendig sind.

Bei vom Markt her bekannten Fertigungsanlagen zur Herstellung von Fahrzeugen, und insbesondere in zu solchen Anlagen gehörenden Oberflächenbehandlungsanlagen, werden die Fahrzeugkarosserien bei verschiedenen Arbeitsschritten mit spurgebundenen Fördersystemen gefördert, bei denen die Fahrzeugkarosserien wie auf einer Perlenkette aufgereiht in weitgehend unveränderlicher Reihenfolge durch die Anlage gefördert werden. Eine Veränderung der vorgegebenen Reihenfolge und des Behandlungsablaufes ist bei solchen spurgebundenen Fördersystemen, wenn überhaupt, nur möglich, wenn Umsetzvorrichtungen vorhanden sind. Dabei müssen entsprechende Nebenstrecken vorgehalten werden, wodurch der bauliche Aufwand und die damit verbundenen Kosten sehr hoch werden. Als derartige unterschiedliche Fördersysteme, die in den verschiedenen Arbeits- oder Behandlungseinrichtungen verwendet werden können, sind beispielsweise Tragkettenförderer, Rollenbahnen mit oder ohne Querverschiebewagen und Drehtischen sowie Hängebahnförderer bekannt. Dabei können die Fahrzeugkarosserien zeitweise auf sogenannten Skids, wie sie an und für sich bekannt sind, befestigt sein.

Es ist Aufgabe der Erfindung, ein Verfahren, eine Oberflächenbehandlungsanlage und eine Fertigungsanlage der eingangs genannten Art bereitzustellen, welche diesen Gedanken Rechnung tragen.

Diese Aufgabe wird bei einem Verfahren der eingangs genannten Art dadurch gelöst, dass die Fahrzeugkarosserien mindestens von einer Korrosionsschutzbehandlung bis zu einer Endmontage in einer Oberflächenbehandlungsanlage zur Oberflächenbehandlung der Fahrzeugkarosserien zumindest bereichsweise mit einem fahrerlosen Transportsystem gefördert werden, welches eine Vielzahl von flurgebundenen Transportwagen umfasst, die auf einem Fahrboden fahren und die jeweils ein eigenes Antriebssystem mit sich führen und unabhängig voneinander angetrieben und verfahren werden.

Erfindungsgemäß wurde erkannt, dass es möglich ist, wenigsten in einer Oberflächenbehandlungsanlage eine Abstimmung der Behandlungseinrichtungen mit einem fahrerlosen Fördersystem zu erreichen, durch welche die Fahrzeugkarosserien hochflexibel und unabhängig voneinander gefördert werden können, so dass auch eine kurzfristige Veränderung des Produktionsablaufs oder des individuellen Herstellungsprozesses eines einzelnen Fahrzeugs möglich ist.

Besonders effektiv ist es, wenn die Fahrzeugkarosserien bei allen Arbeitsschritten, die in der Oberflächenbehandlungsanlage durchgeführt werden, mittels des fahrerlosen Transportsystems gefördert werden.

Es ist von großem Vorteil für die Gesamtanlage, wenn Fahrzeugkarosserien in einer Rohbauanlage und/oder in einer Korrosionsschutzanlage und/oder in einer Montageanlage mit demselben fahrerlosen Fördersystem gefördert werden, wie in der Oberflächenbehandlungsanlage.

In Abkehr von bekannten Anlagen wird somit eine Fertigungsanlage betrieben, bei der für im Idealfall alle Arbeits- und Behandlungstechniken eine Abstimmung der einzelnen Arbeits- oder Behandlungseinrichtungen an das fahrerlose Fördersystem realisiert ist. Auch wenn beispielsweise in der Rohbauanlage und in der Oberflächenbehandlungsanlage ein und dasselbe Fördersystem genutzt werden kann, in der Korrosionsschutzanlage jedoch nicht, wird dadurch bereits als beträchtlicher Vorteil erreicht, dass die Fördersysteme im Rohbau und der Oberflächenbehandlung nicht unterschiedlich konzeptioniert werden müssen.

Besonders günstig ist es, wenn Transportwagen verwendet werden, welche ein Transportwagen-Fahrwerk und eine Befestigungseinrichtung für zumindest eine Fahrzeugkarosserie umfassen, die mittels einer Verbindungseinrichtung miteinander gekoppelt sind.

Ein derartiges Fördersystem kann besonders gut eingesetzt werden, wenn die Fahrzeugkarosserien für die Durchführung wenigstens eines Arbeitsschrittes durch wenigstens eine Behandlungseinrichtung gefördert werden, welche ein Gehäuse umfasst, in dem ein Behandlungstunnel untergebracht ist, und welche einen von dem Behandlungstunnel getrennten Fahrraum für das Transportwagen-Fahrwerk umfasst, wobei der Behandlungstunnel und der Fahrraum derart durch einen Verbindungsdurchgang miteinander verbunden sind, dass das Transportwagen-Fahrwerk im Fahrraum bewegt wird, wobei die Befestigungseinrichtung im Behandlungstunnel mitgeführt wird und sich die Verbindungseinrichtung durch den Verbindungsdurchgang hindurch erstreckt. Hierdurch wird eine Trennung des Behandlungsbereichs von dem Förderbereich bewirkt. Je nach Art der Behandlung ist eine solche Trennung nicht notwendig. Gegebenenfalls kann nur eine Trennung durch einen entsprechenden Boden erfolgen, ohne dass der Bereich oberhalb dieses Bodens durch eigene Seitenwände oder eine Decke begrenzt sein muss.

Vorzugsweise wird wenigstens eine Behandlungseinrichtung verwendet, die einen Tunnelboden mit dem Verbindungsdurchgang aufweist und bei welcher der Fahrraum unterhalb des Behandlungstunnels angeordnet ist.

Alternativ oder ergänzend wird vorteilhaft wenigstens eine Behandlungseinrichtung verwendet, bei welcher im Behandlungstunnel ein Fahrraumgehäuse untergebracht ist, welches den Fahrraum zumindest bereichsweise innerhalb des Behandlungstunnels begrenzt und welches den Verbindungsdurchgang aufweist.

Außerdem kann alternativ oder ergänzend wenigstens eine Behandlungseinrichtung verwendet werden, bei welcher das Fahrraumgehäuse eine thermische Isolationseinrichtung bereitstellt. Dies ist besonders von Vorteil, wenn die Behandlungseinrichtung ein Trockner ist.

Es ist besonders von Vorteil, wenn Transportwagen verwendet werden, die ein omnidirektionales Antriebssystem haben, mit dem die Transportwagen aus dem Stand heraus in eine beliebige Richtung fahren können.

Mit einem solchen omnidirektionalen Antrieb können die Transportwagen beispielsweise auf der Stelle gedreht oder gewendet werden. Außerdem ist es möglich, die Fahrzeuge seitlich ohne Kurvenfahrt zu versetzen. Dadurch können sie raumsparend aus einer Linie herausgelöst werden, um zu einer bestimmten Arbeits- oder Behandlungseinrichtung zu fahren oder nachfolgende Transportwagen überholen zu lassen. Umgekehrt können die Transportwagen auch so gesteuert werden, dass ein erster Transportwagen einen zweiten Transportwagen überholt, während sich der zweite Transportwagen in einer Arbeits- oder Behandlungseinrichtung befindet.

Die oben genannte Aufgabe wird bei einer Oberflächenbehandlungsanlage der eingangs genannten Art dadurch gelöst, dass ein fahrerloses Transportsystem vorgesehen ist, welches eine Vielzahl von flurgebundenen Transportwagen umfasst, an welchen jeweils eine Fahrzeugkarosserie befestigbar ist und welche auf einem Fahrboden fahren, wobei die Transportwagen (28) jeweils ein eigenes Antriebssystem mit sich führen und unabhängig voneinander antreibbar und verfahrbar sind.

Die dadurch erzielten Vorteile entsprechen den oben zum Verfahren erläuterten Vorteilen.

Vorzugsweise umfasst jeder Transportwagen ein Transportwagen-Fahrwerk und eine Befestigungseinrichtung für zumindest eine Fahrzeugkarosserie, die mittels einer Verbindungseinrichtung miteinander gekoppelt sind.

Entsprechend ist es günstig, wenn Fahrzeugkarosserien für die Durchführung wenigstens eines Arbeitsschrittes mittels des Fördersystems durch wenigstens eine Behandlungseinrichtung förderbar sind, wobei die Behandlungseinrichtung ein Gehäuse umfasst, in dem ein Behandlungstunnel untergebracht ist, und welche einen von dem Behandlungstunnel getrennten Fahrraum für das Transportwagen-Fahrwerk umfasst, wobei der Behandlungstunnel und der Fahrraum derart durch einen Verbindungsdurchgang miteinander verbunden sind, dass das Transportwagen-Fahrwerk im Fahrraum bewegbar ist, wobei die Befestigungseinrichtung im Behandlungstunnel mitgeführt wird und sich die Verbindungseinrichtung durch den Verbindungsdurchgang hindurch erstreckt.

Abhängig von einem durchzuführenden Arbeitsschritt kann es günstig sein, dass wenigstens eine Behandlungseinrichtung einen Tunnelboden mit dem Verbindungsdurchgang aufweist, wobei der Fahrraum unterhalb des Behandlungstunnels angeordnet ist.

Alternativ oder ergänzend kann es vorteilhaft sein, dass bei wenigstens einer Behandlungseinrichtung ein Fahrraumgehäuse im Behandlungstunnel untergebracht ist, welches den Fahrraum zumindest bereichsweise innerhalb des Behandlungstunnels begrenzt und welches den Verbindungsdurchgang aufweist.

Ebenfalls alternativ oder ergänzend kann das Fahrraumgehäuse bei wenigstens einer Behandlungseinrichtung eine thermische Isolationseinrichtung bereitstellen.

Wie oben erläutert ist es günstig, wenn die Transportwagen ein omnidirektionales Antriebssystem haben, mit dem die Transportwagen aus dem Stand heraus in eine beliebige Richtung fahren können.

Die oben genannte Aufgabe wird bei einer Fertigungsanlage der eingangs genannten Art dadurch gelöst, dass die Oberflächenbehandlungsanlage eine Oberflächenbehandlungsanlage mit einigen oder allen der oben genannten Merkmale ist. Die Vorteile dazu entsprechen den Vorteilen, die im Zusammenhang mit dem Verfahren und der Oberflächenbehandlungsanlage erläutert wurden.

In entsprechender Weise kann es günstig sein, wenn in der Korrosionsschutzanlage dasselbe Fördersystem für die Fahrzeugkarosserien vorhanden ist, wie in der Oberflächenbehandlungsanlage.

Wenn außerdem in eine Rohbauanlage und/oder eine Korrosionsschutzanlage und/oder eine Endmontageanlage vorhanden ist, ist es vorteilhaft, wenn dort dasselbe fahrerlose Fördersystem für die Fahrzeugkarosserien vorhanden ist, wie in der Oberflächenbehandlungsanlage.

Nachfolgend werden Ausführungsbeispiele der Erfindung anhand der Zeichnungen näher erläutert. In diesen zeigen
- Figur 1: schematisch die Abfolge von Arbeitsschritten bei der Herstellung von Kraftfahrzeugen, wobei insbesondere eine Oberflächenbehandlungsanlage für Fahrzeugkarosserien veranschaulicht ist, in welcher Fahrzeugkarosserien in mehreren Arbeitsschritten unterschiedlicher Funktionalität auf unterschiedliche Art behandelt werden;
- Figur 2: eine perspektivische Ansicht eines flurgebundenen Transportwagens eines fahrerlosen Transportsystems für Fahrzeugkarosserien, bei dem ein Transportwagen-Fahrwerk über eine Verbindungseinrichtung mit einer Befestigungseinrichtung für Werkstücke verbunden ist;
- Figur 3: eine perspektivische Ansicht eines abgewandelten Transportwagens eines fahrerlosen Transportsystems für Fahrzeugkarosserien mit einem Umfeldsensorsystem;
- Figur 4: einen Querschnitt einer Behandlungseinrichtung für einen Arbeitsschritt, die mit dem Transportsystem nach den Figuren 2 und 3 zusammenarbeitet, wobei ein Behandlungstunnel gezeigt ist, dessen Tunnelboden einen zu der Verbindungseinrichtung komplementären Verbindungsdurchgang aufweist, der zu einem Fahrraum für das Transportwagen-Fahrwerk führt, wobei die Befestigungseinrichtung im Behandlungstunnel und das Transportwagen-Fahrwerk im Fahrraum angeordnet sind;
- Figur 5: einen Querschnitt einer abgewandelten Behandlungseinrichtung mit einem in den Behandlungstunnel integrierten Fahrraum für das Transportwagen-Fahrwerk;
- Figur 6: einen Querschnitt einer Lackierkabine für einen Applikationsschritt, die mit dem Transportsystem nach den Figuren 2 und 3 zusammenarbeitet, wobei ein in einen Lackiertunnel integrierter Fahrraum für das Transportwagen-Fahrwerk vorhanden ist;
- Figur 7: schematisch das Layout einer Anlage zur Herstellung von Kraftfahrzeugen, wie es auf Grund des Transportsystems nach den Figuren 2 und 3 beispielhaft möglich ist.

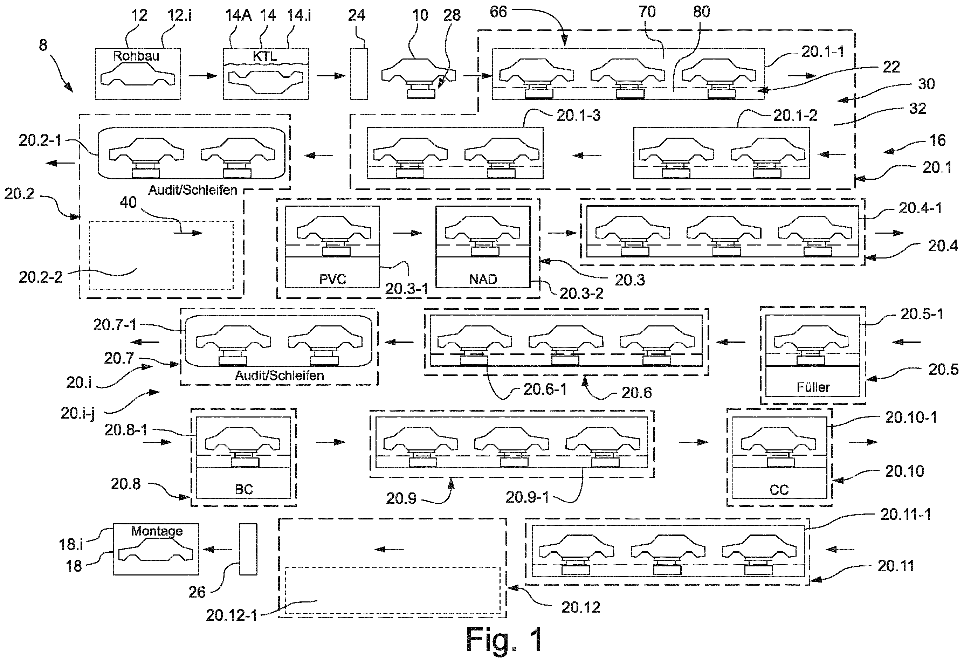

Figur 1 illustriert schematisch eine Fertigungsanlage 8 zur Herstellung von Gegenständen, wobei hier eine Anlage 8 zur Herstellung von Fahrzeugkarosserien 10 gezeigt ist. Die Anlage 8 umfasst ihrerseits einzelne Anlagen 12, 14, 16 und 18 umfasst. Die Fahrzeugkarosserien 10 gelangen nach einer Rohbauanlage 12 in eine Korrosionsschutzanlage 14 und durchlaufen im Anschluss daran eine Oberflächenbehandlungsanlage 16. Dann kommen die Fahrzeugkarosserien 10 in eine Endmontageanlage 18, in welcher die fahrbereiten Kraftfahrzeuge montiert werden. Von den Fahrzeugkarosserien 10 trägt der Übersichtlichkeit halber lediglich eine einzige ein Bezugszeichen.

In den Anlagen 12, 14, 16 und 18 können unterschiedliche, aufeinander folgende Arbeitsschritte durchgeführt werden, von denen verschiedene Arbeitschritte der Rohbauanlage 12, der Korrosionsschutzanlage 14 und der Montageanlage 18 durch das Bezugszeichen der jeweiligen Anlage zuzüglich des Index ".i", also durch 12.i, 14.i bzw. 18.i, angedeutet sind. Nur die verschiedenen Arbeitsschritte der Oberflächenbehandlungsanlage 16 tragen eigene Bezugszeichen 20.i. Der Index ".i" soll darstellen, dass jeweils i=1 bis n Arbeitsschritte durchgeführt werden müssen, wobei n jeweils die Gesamtzahl der Arbeitsschritte 12.i, 14.i, 18.i bzw. 20.i angibt, in denen die Fahrzeugkarosserien 10 auf unterschiedliche Art behandelt werden. Wenn nur ein einziger Arbeitsschritt durchgeführt werden muss, ist n folglich jeweils gleich 1. Wenn zwei Arbeitsabschnitte aufeinanderfolgen, tragen diese die Indizes "i" und "i+1".

In der Rohbauanlage 12 werden in einem Presswerk gefertigte Blechteile zu den Fahrzeugkarosserien 10 zusammengefügt. Dies kann in unterschiedlichen Rohbauschritten 12.i durch unterschiedliche bekannte Techniken erfolgen. Beispielhaft seien Punktschweißen, Bahnschweißen, Druckfügen, Nieten und Kleben genannt. Hier werden folglich Arbeiten an einer Fahrzeugkarosserie 10 durchgeführt.

In der Korrosionsschutzanlage 14 erhalten die Fahrzeugkarosserien 10 eine Korrosionsschutzbehandlung. In der Korrosionsschutzanlage 14 werden einzelne Korrosionsschutzschritte 14.i durchgeführt; die Korrosionsschutzanlage 14 kann als an und für sich bekannte Anlage zur kataphoretischen Tauchlackierung ausgebildet sein. Beim vorliegenden Ausführungsbeispiel ist dies der Fall, wie es in Figur 1 schematisch durch ein KTL-Tauchbad 14A angedeutet ist. Aber auch andere Korrosionsschutzbehandlungen können erfolgen, wie beispielsweise eine Applikation eines Korrosionsschutzes durch Spritzen bzw. Sprühen oder dergleichen. Zur Korrosionsschutzanlage 14 zählt in der Regel auch mindesten eine Behandlungseinrichtung für eine Vorbehandlung.

In der Montageanlage 18 werden die Fahrzeugkarosserien 10 in Arbeitsschritten 18.i mit den notwendigen Komponenten und Bauteilen für ein fahrbereites Fahrzeug bestückt.

In der Oberflächenbehandlungsanlage 16 werden nun mehrere unterschiedliche Arbeitsschritte 20.i durchgeführt, in denen die Fahrzeugkarosserien 10 auf unterschiedliche Art behandelt werden und die gegebenenfalls ihrerseits mehrere Arbeitsvorgänge umfassen. Unterschiedliche Arbeitsschritte 20.i sind in Figur 1 gestrichelt eingerahmt.

Unterschiedliche, aufeinanderfolgende Arbeitsschritte 20.i sind also jeweils durch das Bezugszeichen 20 mit einem fortlaufenden Zahlenindex ".i", d.h. 20.1, 20.2, 20.3, usw. gekennzeichnet. Behandlungseinrichtungen, die für einen Arbeitsschritt 20.i notwendig sind, tragen das Bezugszeichen des Arbeitsschrittes 20.i zuzüglich eines Zahlenindex "-j". Wenn für einen Arbeitsschritt 20.i lediglich eine einzige Behandlungseinrichtung benötigt wird, trägt diese daher das Bezugszeichen 20.i-1, bei mehreren Behandlungseinrichtungen für einen Arbeitsschritt 20.i gibt es entsprechend Behandlungseinrichtungen 20.i-1, 20.i-2, usw.

In den übrigen Anlagen 12, 14 und 18 sind für die zugehörigen Arbeitsschritte 12.i, 14.i und 18.i Arbeitseinrichtungen oder Behandlungseinrichtungen vorhanden, die vorliegend nicht gesondert gezeigt und mit Bezugszeichen versehen sind.

Die Fahrzeugkarosserien 10 werden in der Oberflächenbehandlungsanlage 16 in jeweils zwei Arbeitsschritten 20.i und 20.i+1, die aufeinander folgen, auf unterschiedliche Art behandelt. Dies bedeutet, dass bei der Abfolge der Arbeitsschritte 20.i durchaus mehrere Arbeitsschritte 20.i vorhanden sind, in denen die Fahrzeugkarosserien 10 auf die gleiche Art behandelt werden. Die Unterscheidung zwischen zwei in der Abfolge aufeinanderfolgende Arbeitsschritte 20.i und 20.i+1 wird vorliegend dadurch definiert, dass sich die Art der Behandlung ändert. Im Sinne der oben erläuterten Einteilung kommt es also beim Übergang zwischen Applikationsschritten, Temperierschritten und Funktionsschritte zu einer Änderung der Art der Behandlung.

Beim vorliegenden Ausführungsbeispiel werden in der Oberflächenbehandlungsanlage 16 exemplarisch folgende Arbeitsschritte 20.i in zugehörigen Behandlungseinrichtungen 20.i-j durchgeführt:
20.1 erster Temperierschritt
   20.1-1 KTL-Trockner
   20.1-2 KTL-Kühleinrichtung
   20.1-3 KTL-Abdunsteinrichtung
20.2 erster Funktionsschritt
   20.2-1 Audit/Schleif-Einrichtung
   20.2-2 Speichereinrichtung
20.3 erster Applikationsschritt
   20.3-1 Unterbodenschutz(PVC)-Applikationseinrichtung
   20.3.2 Nahtabdichten(NAD)-Applikationseinrichtung
20.4 zweiter Temperierschritt
   20.4-1 PVC-Trockner
20.5 zweiter Applikationsschritt
   20.5-1 Füller-Applikationseinrichtung
20.6 dritter Temperierschritt
   20.6-1 Füller-Trockner
20.7 zweiter Funktionsschritt
   20.7-1 Audit/Schleif-Einrichtung
20.8 dritter Applikationsschritt
   20.8-1 Basislack(BC)-Lackiereinrichtung
20.9 vierter Temperierschritt
   20.9-1 BC-Trockner
20.10 vierter Applikationsschritt
   20.10-1 Decklack(CC)-Lackiereinrichtung
20.11 fünfter Temperierschritt
   20.11-1 CC-Trockner
20.12 dritter Funktionsschritt
   20.12-1 Speicher

Die Fahrzeugkarosserien 10 werden von einem Arbeitsschritt 20.i zum nächsten Arbeitsschritt 20.i+1 und beim Durchführen der einzelnen Arbeitsschritte 20.i, d.h. 20.1, 20.2, ..., 20.n, mit ein und demselben Fördersystem 22 gefördert, wobei n die Anzahl der durchzuführenden Arbeitsschritte angibt. Beim vorliegenden Ausführungsführungsbeispiel ist n = 12. Hierzu sind das Fördersystem 22 und die Behandlungseinrichtungen 20.i-j aufeinander abgestimmt, was weiter unten deutlich wird.

Zwischen dem Tauchbad 14A der Korrosionsschutzanlage 14 und dem ersten Temperierschritt 20.1 befindet sich eine Übergabeeinrichtung 24, mittels welcher eine zu behandelnde Fahrzeugkarosserie 10 von dem Fördersystem der Korrosionsschutzanlage 14 an das Fördersystem 22 der Oberflächenbehandlungsanlage 16 übergeben werden kann. In entsprechender Weise befindet sich zwischen dem dritten Funktionsschritt 20.12, d.h. dem letzten Arbeitsschritt in der Oberflächenbehandlungsanlage 16, und der Endmontageanlage 18 eine Übergabeeinrichtung 26, mittels welcher ein behandelte Fahrzeugkarosserie 10 von dem Fördersystem 22 der Oberflächenbehandlungsanlage 16 an das Fördersystem der Endmontageanlage 18 übergeben werden kann.

Wenn das Fördersystem in der Korrosionsschutzanlage 14 und/oder der Endmontageanlage 18 dasselbe Fördersystem 22 ist, wie in der Oberflächenbehandlungsanlage 16, ist die Übergabeeinrichtungen 24 und/oder die Übergabeeinrichtung 26 nicht vorhanden. Wenn in der Rohbauanlage 12 nicht dasselbe Fördersystem genutzt wird, wie in der Korrosionsschutzanlage 14, wie es der Fall ist, wenn ein KTL-Tauchbad 14A vorhanden ist, ist zwischen diesen beiden Anlagen eine hier nicht eigens gezeigte Übergabeeinrichtung vorhanden.

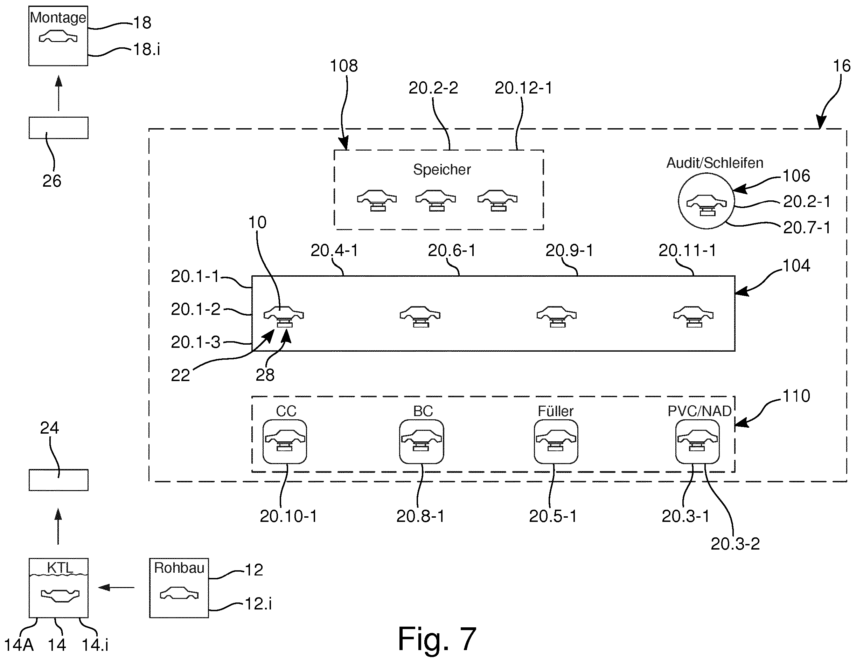

Bei dem Transportsystem 22 handelt es sich um ein fahrerloses Transportsystem mit einer Vielzahl von flurgebundenen Transportwagen 28, auf denen die Fahrzeugkarosserien 10 transportiert werden und von denen in den Figuren 1 und 7 nur jeweils ein Transportwagen 28 ein Bezugszeichen trägt. Die Transportwagen 28 können auf einem Fahrboden 30 fahren. Die Handhabung und Steuerung eines fahrerlosen Transportsystems ist grundsätzlich im Stand der Technik bekannt; die Anlage 8 umfasst in diesem Sinne eine nicht eigens gezeigte übergeordnete Zentralsteuerung, Einrichtungen zur Ortsbestimmung und Lageerfassung der Transportwagen 28, Einrichtungen zur Datenübertragung sowie eine geeignete Infrastruktur, welche den Transportwagen 28 eine Bewegung erlaubt.

Es kann auch möglich sein, dass die Fahrzeugkarosserien 10 bei der kataphoretischen Tauchbehandlung in der Korrosionsschutzanlage 14 und bei dem zugehörige Trockenvorgang, nämlich dem ersten Temperierschritt 20.1, mit ein und demselben Transportsystem, beispielsweise einem Hängebahnsystem, gefördert werden, das von dem fahrerlosen Transportsystem 22 verschieden ist. In diesem Fall gibt es entsprechend eine - hier nicht eigens gezeigte - Übergabestation zwischen dem ersten Temperierschritt 20.1 und dem ersten Funktionsschritt 20.2.

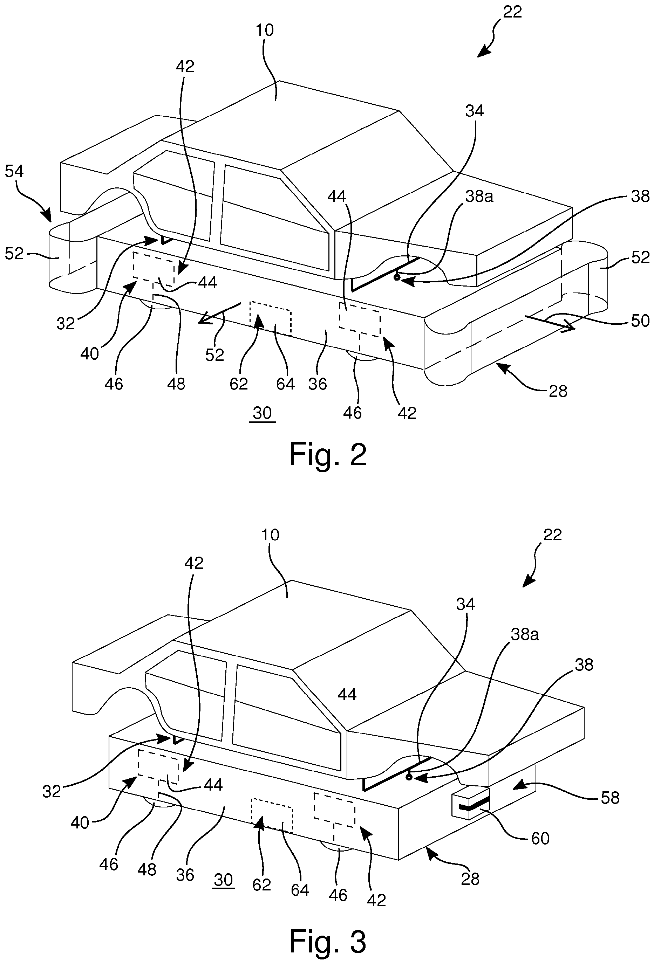

Die Figuren 2 und 3 zeigen nun jeweils einen einzelnen Transportwagen 28 gemäß verschiedenen Sicherheitskonzepten. Jeder Transportwagen 28 umfasst eine Befestigungseinrichtung 32, an welcher eine Fahrzeugkarosserie 10 befestigt werden kann. Hierfür umfasst die Befestigungseinrichtung 32 ein Tragprofil 34 mit Lagerbolzen, welche in an und für sich bekannter Art und Weise mit Gegenelementen an der Fahrzeugkarosserie 10 zusammenarbeiten, so dass die Fahrzeugkarosserie 10 an der Befestigungseinrichtung 32 fixiert werden kann. Die Befestigungseinrichtung 32 kann auch mehrere Sätze von solchen Lagerbolzen aufweisen, die an unterschiedliche Fahrzeugkarosserien 10 mit verschiedenen Abmessungen und Ausgestaltungen angepasst sind, so dass die Befestigungseinrichtung 32 flexibel für unterschiedliche Fahrzeugkarosserietypen genutzt werden kann.

Die Befestigungseinrichtung 32 nimmt eine Fahrzeugkarosserie 10 somit unmittelbar auf, ohne dass die Fahrzeugkarosserie 10 auf einem Werkstückträger, wie beispielsweise einem an und für sich bekannten Skid, befestigt ist. Bei einer nicht eigens gezeigten Abwandlung kann die Befestigungseinrichtung jedoch auch für die Aufnahme eines solchen Skids konzipiert sein, dass dann seinerseits die Fahrzeugkarosserie 10 trägt.

Der Transportwagen 28 umfasst ein Transportwagen-Fahrwerk 36, welches auf dem Fahrboden 30 abläuft und die Befestigungseinrichtung 32 lagert. Das Transportwagen-Fahrwerk 36 ist über eine Verbindungseinrichtung 38 in Form von zwei nach oben ragende Tragstreben 38a mit der Befestigungseinrichtung 32 gekoppelt. In den Figuren 2 und 3 ist lediglich eine Tragstrebe 38a zu erkennen.

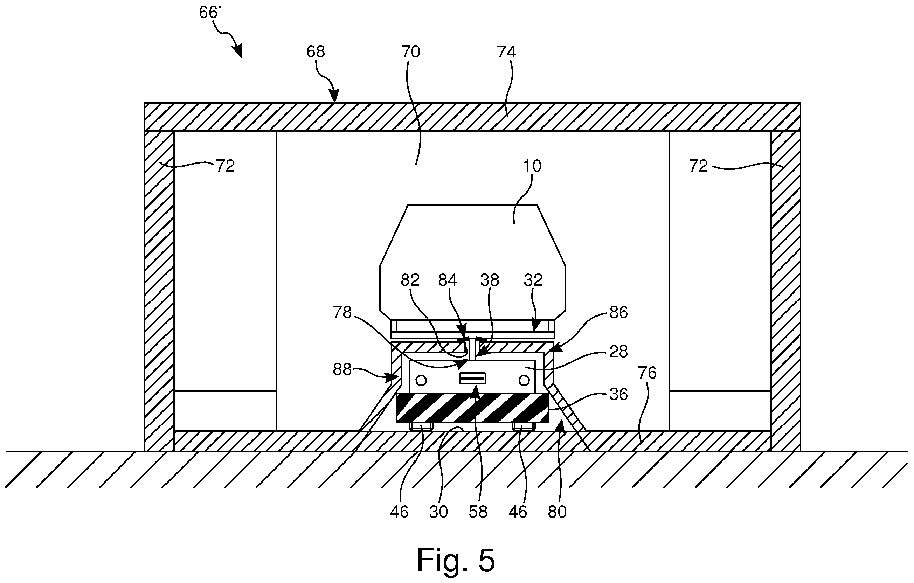

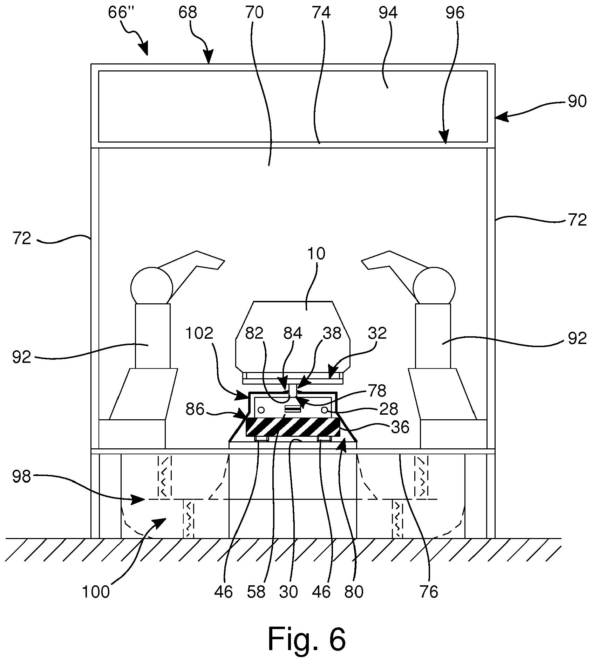

In den Figuren 5 und 6 ist veranschaulicht, dass das Transportwagen-Fahrwerk 36 mit einer visuell auffälligen Warnlackierung oder -beklebung versehen sein kann.

Jeder Transportwagen 28 führt jeweils ein eigenes Antriebssystem 40 mit sich, so dass die Transportwagen 28 unabhängig voneinander angetrieben und verfahren werden können.

Das Antriebssystem 40 ist omnidirektional, so dass die Transportwagen 28 aus dem Stand heraus in eine beliebige Richtung fahren können. Das omnidirektionale Antriebssystem 40 umfasst hierzu an sich bekannte Fahr-Dreh-Module 42. Alternativ können auch beispielsweise Allseitenräder oder Mecanum-Räder vorhanden sein, wie dies an sich im Stand der Technik bekannt ist.

Die Fahr-Dreh-Module 42 umfassen Antriebseinheiten 44, die derart mit nach unten vorstehenden Antriebsräder 46 gekoppelt sind, dass die Antriebsräder 46 nicht nur für den Vortrieb des Transportwagens 28 angetrieben, sondern auch jeweils um eine vertikale Drehachse 48 verdreht werden können.

Befinden sich die Antriebsräder 46 aller Fahr-Dreh-Module 42 in der in den Figuren 2 und 3 gezeigten Drehstellung bezüglich ihrer vertikalen Achse 48, so bewegt sich der Transportwagen 28 beim Drehen der Antriebsräder 46 entlang seiner Längsrichtung, wie dies in Figur 2 durch einen Pfeil 50 angedeutet ist. Werden die Antriebsräder 46 alle um 90° bezüglich ihrer vertikalen Achse 48 gedreht, so kann der Transportwagen 28 aus dem Stand heraus, d. h. ohne vorherige Kurvenfahrt, senkrecht zu seiner Längsrichtung 50 fahren, wie dies in Figur 2 durch einen Pfeil 52 angedeutet ist. Durch eine entsprechende Ansteuerung der Fahr-Dreh-Module 42 können auch Drehungen auf der Stelle oder Schrägfahrten realisiert werden. Dadurch können sie raumsparend aus einer Linie herausgelöst werden, um zu einem bestimmten Arbeitsschritt 20.i zu fahren, und auf engem Raum manövrieren. Beispielsweise können die Transportwagen 28 eine Drehung um 180° in einer Behandlungseinrichtung durchführen, wenn dort bestimmte Bearbeitungseinrichtungen nur auf einer Seite vorgesehen sind.

Der in Figur 2 gezeigte Transportwagen 28 umfasst in Fahrrichtung vorne und hinten mechanische Schutzeinrichtungen 54, die als Aufpralldämpfer 56 ausgebildet sind. Falls es dazu kommt, dass ein erster Transportwagen 28 auf einen zweiten Transportwagen 28 oder auf ein sonstiges Hindernis auffährt, wird der Aufprall durch die Aufpralldämpfer 56 abgepuffert und ein Schaden sowohl an dem Transportwagen 28 als auch an der von diesem getragenen Fahrzeugkarosserie 10 verhindert.

Der in Figur 3 gezeigte Transportwagen 28 umfasst ein Umfeldsensorsystem 58 mit in Fahrrichtung vorne und hinten am Transportwagen-Fahrwerk 36 angebrachten Sensoren 60. Mit diesem Umfeldsensorsystem 58 können Hindernisse im Fahrweg des Transportwagens 28, seien es andere Transportwagen 28 oder andere im Bewegungsfeld des Transportwagens 28 auftauchende Gegenstände, erfasst und an die oben genannte Zentralsteuerung übermittelt werden, welche eine alternative Route zum Ziel des Transportwagens 28 berechnet und entsprechende Steuerbefehle an den Transportwagen 28 weitergibt.

Für die Energieversorgung der Transportwagen 28 führen diese eine autarke Energieversorgungseinrichtung 62 mit sich. Darunter ist eine Energieversorgungseinrichtung zu verstehen, welche die Energieversorgung der Fahr-Dreh-Module 42 und der sonstigen elektrischen Verbraucher im Fahrbetrieb, d.h. während der Bewegung des Transportwagens 28, unabhängig von externen Energiequellen sicherstellt.

Beim vorliegenden Ausführungsbeispiel ist die Energieversorgungseinrichtung 62 mit wiederaufladbaren Energiespeichern 64 für elektrische Energie konzipiert, die in Form eines Akkumulators oder eines Kondensators bereitgestellt sein können. Alternativ können auch Druckgasspeicher als Energiequelle für Druckgasantriebe vorhanden sein.

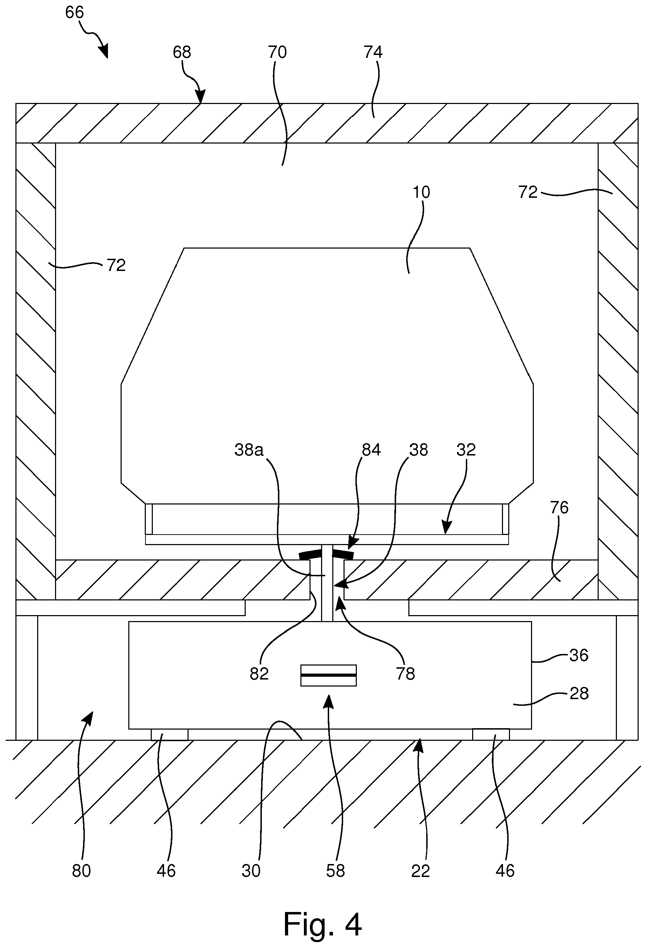

Anhand einer Behandlungseinrichtung 66 veranschaulicht Figur 4 das Grundkonzept einer Arbeitseinrichtung oder Behandlungseinrichtung, wie sie in den Anlagen 12, 14, 16, 18 für einzelne Arbeitsschritte eingesetzt wird. Die Behandlungseinrichtung 66 zeigt insbesondere eine Behandlungseinrichtung 20.i-j, wie sie für einen der Temperierschritte 20.1, 20.4, 20.6, 20.9, 20.11 oder für einen der Applikationsschritte 20.3, 20.5, 20.8, 20.10 in der Oberflächenbehandlungsanlage 16 vorgesehen sein kann. Die Behandlungseinrichtung 66 steht somit exemplarisch für die beim vorliegenden Ausführungsbeispiel vorhandenen Behandlungseinrichtungen 20.i-j und die nicht eigens gezeigten Arbeits- und Behandlungseinrichtungen der übrigen Anlagen 12, 14 und 18.

Die jeweiligen, nachfolgend erläuterten Komponenten der Behandlungseinrichtung 78 spiegeln lediglich die Grundfunktionalität der Komponente wieder. So ist zum Beispiel das Gehäuse eines Trockners in bekannter Art und Weise anders ausgebildet, als beispielsweise das Gehäuse einer Lackierkabine.

Die Behandlungseinrichtung 66 umfasst ein Gehäuse 68, welches einen Behandlungstunnel 70 begrenzt und Seitenwände 72, eine Decke 74 und einen Tunnelboden 76 umfasst. Der Tunnelboden 76 weist einen zu der Verbindungseinrichtung 38 der Transportwagen 28 komplementären Verbindungsdurchgang 78 auf, der zu einem unterhalb des Behandlungstunnels 70 angeordneten Fahrraum 80 für das Transportwagen-Fahrwerk 36 führt.

In Figur 1 ist die Trennung des Behandlungstunnels 70 von dem Fahrraum 80 bei den Behandlungseinrichtungen 20.i-j, die funktional wie die Behandlungseinrichtung aufgebaut sind, durch jeweils eine gestrichelte Linie veranschaulicht; der

Übersichtlichkeit halber sind nur bei dem KTL-Trockner 20.1-1 lediglich die Behandlungseinrichtung 66, der Behandlungstunnel 70 und der Fahrraum 80 mit Bezugszeichen versehen. Bei den Audit/Schleif-Einrichtungen 20.2-1 und 20.7-1 ist beispielhaft keine Trennung eines Fahrraums und eines Behandlungstunnels gezeigt. Hierauf kann stets dann verzichtet werden, wenn keine Gefahr besteht, dass die Komponenten und Bauteile des Fördersystems 22 bei der Behandlung in Mitleidenschaft gezogen werden.

Der Fahrraum 80 kann zur Umgebung der Behandlungseinrichtung 78 hin offen sein; jedenfalls muss kein eigenes Gehäuse für den Fahrraum 80 vorhanden sein.

Figur 4 zeigt seitlich des Fahrraums 80 lediglich Stützpfosten 84, welche das Gehäuse 68 tragen. Bei einer nicht eigens gezeigten Abwandlung ist der Fahrraum 80, der unterhalb des Behandlungstunnels 70 verläuft, durch ein eigenes Gehäuse begrenzt. Alternativ können sich auch die Seitenwände 72 des Gehäuses 68 nach unten über den Tunnelboden 76 hinaus erstrecken, so dass sie den Fahrraum 80 seitlich begrenzen.

Bei der Einfahrt eines mit einer Fahrzeugkarosserie 10 beladenen Transportwagens 28 in eine Behandlungseinrichtung 66 wird die Verbindungseinrichtung 38 des Transportwagens 28 also gleichsam in den Verbindungsdurchgang 78 des Tunnelbodens 76 eingefädelt. Wenn die Fahrzeugkarosserie 10 dann durch den Behandlungstunnel 70 gefördert wird, bewegt sich das Transportwagen-Fahrwerk 36 im Fahrraum 80 und führt die Befestigungseinrichtung 32 im Behandlungstunnel 70 mit sich, wobei sich die Verbindungseinrichtung 38, d.h. beim vorliegenden Ausführungsbeispiel die Tragstreben 38a und 38b, durch den Verbindungsdurchgang 78 im Tunnelboden 76 hindurch erstreckt.

Wie in Figur 4 zu erkennen ist, ist der Verbindungsdurchgang beim vorliegenden Ausführungsbeispiel passend zu den Tragstreben 38a, 378 als vertikaler Durchgangsschlitz 82 ausgebildet. In diesem Fall könnte die Tunnelatmosphäre bei entsprechenden Strömungsverhältnissen ohne Gegenmaßnahmen weitgehend ungehindert aus dem Behandlungstunnel 70 durch den Verbindungsdurchgang 78 nach unten in den Fahrraum 80 einströmen.

Bei einem Trockner ist die Tunnelatmosphäre mit Lösemittel belastet. Bei einer Lackiereinrichtung trägt die Tunnelatmosphäre insbesondere Lack-Overspray mit sich, welcher sich dann auf dem Transportwagen-Fahrwerk 36 ablagern könnte.

Um ein solches Ausströmen der Tunnelatmosphäre aus dem Behandlungstunnel 70 zu verhindern, sind ergänzend Abschirmmittel 84 vorgesehen, durch welche ein Kontakt wenigstens der Transportwagen-Fahrwerke 38 mit der Tunnelatmosphäre durch den Verbindungsdurchgang 90 hindurch zumindest vermindert wird. Ebenso kann das Nachströmen von Atmosphäre aus dem Fahrraum 92 in den Behandlungstunnel 82 reduziert werden, um eine stabile Atmosphäre im Behandlungstunnel 82 aufrechtzuerhalten. Bei einer Abwandlung kann der Fahrraum 80 auch mit einem leichten Überdruck beaufschlagt sein.

Der Fahrboden 30 für die Transportwagen 28 ist bei der Behandlungseinrichtung 66 nach Figur 4 auf einem Höhenniveau unterhalb des Behandlungstunnels 70 bzw. unterhalb des Tunnelbodens 76 angeordnet.

Figur 5 zeigt eine abgewandelte Behandlungseinrichtung 66', bei welcher der Fahrboden 30 der Transportwagen 28 auf dem gleichen Höhenniveau angeordnet ist, wie der Behandlungstunnel 70 bzw. wie dessen Tunnelboden 76. Hierzu ist im Behandlungstunnel 70 ein Fahrraumgehäuse 86 untergebracht, welches den Fahrraum 80 innerhalb des Behandlungstunnels 70 begrenzt. In diesem Fall weist entsprechend nicht der Tunnelboden 76, sondern das Fahrraumgehäuse 86 den Verbindungsdurchgang 78, hier in Form des vertikalen Durchgangsschlitzes 82, auf. Insbesondere wenn es sich bei der Behandlungseinrichtung 66' um einen Trockner handelt, ist das Fahrraumgehäuse 86 so eingerichtet, dass es eine thermische Isolationseinrichtung 88 bereitstellt, durch welche der Fahrraum 80 gegenüber dem Behandlungstunnel 70 thermisch isoliert ist.

Figur 6 zeigt eine nochmals abgewandelte Behandlungseinrichtung 66" am Beispiel einer Lackierkabine 90, in welcher die Applikationsschritte 20.3, 20.5, 20.6, 20.8 und/oder 20.10 durchgeführt werden können. In dem Behandlungstunnel 70 der Lackierkabine 90 sind an und für sich bekannte Lackierroboter 92 angeordnet. Die Decke 74 des Behandlungstunnels 70 ist in üblicher Weise als untere Begrenzung eines Luftzuführraumes 94 mit Filterdecke 96 ausgebildet. Aus dem Luftzuführraum 94 tritt Kabinenluft in den Behandlungstunnel 70 ein und nimmt auf ihrem Strömungsweg nach unten Overspray auf, bevor sie über den durchlässigen Tunnelboden 74 in einen Bereich 98 unterhalb des Behandlungstunnels 70 strömt. In dem Bereich 98 befindet sich eine Abscheidevorrichtung 100, mit deren Hilfe mitgerissenes Overspray aus der Kabinenluft entfernt wird; diese gereinigte Kabinenluft kann dann, gegebenenfalls nach einer vorgegebenen Konditionierung, in einem Kreislauf wieder zum Luftzuführraum 94 geführt werden. Solche Abscheidevorrichtungen sind an und für sich bekannt und müssen daher nicht weiter erläutert werden.

Der Fahrraum 80 ist auch bei der Lackierkabine 90 von dem Fahrraumgehäuse 86 begrenzt, das in dem Behandlungstunnel 70 angeordnet ist. Im Falle einer Lackierkabine 90 muss das Fahrraumgehäuse 86 jedoch nicht als thermische Isolationseinrichtung ausgebildet sein, sondern lediglich eine Schutzhülle 102 bereitstellen.

Wie oben erwähnt, sind die Behandlungseinrichtungen 20.i-j konzeptionell so ausgebildet, wie die Behandlungseinrichtungen 66, 66' oder 66", so dass die Verbindungseinrichtung 38 der Transportwagen 28 mit dem Tunnelboden 76 bzw. dem Fahrraumgehäuse 86 und den dort jeweils vorhandenen Abschirmmitteln 84 zusammenwirken kann. Die für die jeweilige Behandlung erforderlichen Einrichtungen sind unabhängig davon bei den jeweiligen Behandlungseinrichtungen 20.i-j vorhanden. Die sind zum Beispiel Applikations-, Lackier- und/oder Handhabungsroboter in den Applikationseinrichtungen für die Applikationsschritte oder zugehörige Beleuchtungseinrichtungen bei den Audit/Schleif-Einrichtungen, ebenso wie die für den Betrieb der Behandlungseinrichtungen 20.i-j notwendige Technik, beispielsweise in Form der Technik für den Lufthaushalt bei Lackierkabinen.

Durch das fahrerlose Transportsystem 22 mit den flurgebundenen Transportwagen 28 kann eine auf einem Transportwagen 28 befestigte Fahrzeugkarosserie 10 individuell bewegt werden, ohne dass ihr Förderweg von den Förderwegen anderer Fahrzeugkarosserien 10 abhängt.

Bei vom Markt her bekannten Anlagen mit spurgebundenen Transportwagen sind für jeden Arbeitsschritt 20.i entlang der Förderstrecke eine oder mehrere gesonderte Behandlungseinrichtungen 20.i-j nur für diesen Arbeitsschritt 20.i vorhanden. Bei einer solchen Anlage sind somit für jeden der in Figur 1 veranschaulichten Arbeitsschritte 20.i entsprechende räumliche Arbeitszonen der Oberflächenbehandlungsanlage mit einer oder mehreren zugehörigen Behandlungseinrichtungen 20.i-j definiert, die in der vorgegebenen Reihenfolge von den Transportwagen 28 und den darauf befestigten Fahrzeugkarosserien 10 durchlaufen werden müssen.

Das fahrerlose Transportsystem 22 ermöglicht es demgegenüber, dass für gleichartige Behandlungsschritte 20.i, die beim Behandlungsablauf zu unterschiedlichen Zeitpunkten erfolgen müssen, ein und dieselbe jeweilige Behandlungseinrichtung genutzt werden kann. Insbesondere ist dies für die Temperierschritte 20.1, 20.4, 20.6, 20.9, 20.11 und die Funktionsschritte 20.2, 20.7 und 20.12 möglich. Auch für die Applikationsschritte 20.3, 20.5, 20.8, 20.10 ist dies möglich.

Dieses Konzept veranschaulicht das Anlagenlayout gemäß Figur 7. Dort umfasst die Oberflächenbehandlungsanlage 16 eine einzige Temperiervorrichtung 104, in welcher die Temperierschritte 20.1, 20.4, 20.6, 20.9, 20.11 durchgeführt werden. Die Temperiervorrichtung 104 umfasst hierzu entsprechende Temperaturbereiche und einen Abdunstbereich.

Die Oberflächenbehandlungsanlage 16 umfasst außerdem eine einzige Audit/Schleif-Vorrichtung 106 und eine einzige Speichervorrichtung 108 für die Arbeitsschritte 20.2, 20.7 und 20.12.

Eine Fahrzeugkarosserie 10 wird nun nach dem KTL-Tauchbad 14A mittels der Übergabeeinrichtung 24 auf einen Transportwagen 28 des Transportsystems 22 übergeben und durch diesen durch die Temperiervorrichtung 104 geführt, welche in diesem Fall als KTL-Trockner 20.1-1, als KTL-Kühleinrichtung 20.1-2 und als KTL-Abdunsteinrichtung 20.1-2 für den ersten Temperierschritt 20.1 dient. Hiernach fördert der Transportwagen 22 die Fahrzeugkarosserie 10 zur Audit/Schleif-Vorrichtung 106, welche dann die Audit/Schleif-Einrichtung 20.2-1 für den ersten Funktionsschritt 20.2 bereitstellt. Falls in diesem Schritt eine Zwischenlagerung der Fahrzeugkarosserie 10 erfolgt, dient die Speichervorrichtung 108 als Speichereinrichtung 20.2-2 für diesen Funktionsschritt 20.2.

Nun erfolgt der erste Applikationsschritt 20.3 in der Unterbodenschutz(PVC)-Applikationseinrichtung 20.3-1 und der Nahtabdichten(NAD)-Applikationseinrichtung 20.3.2.

Zur Durchführung des zweiten Temperierschrittes 20.4 wird die Fahrzeugkarosserie 10 erneut in die Temperiervorrichtung 104 gefahren, welche nun als PVC-Trockner 20.4-1 dient.

Im Anschluss erfolgt im zweiten Applikationsschritt 20.5 der Auftrag des Füllers in der Füller-Applikationseinrichtung 20.5-1.

Nun wird die Fahrzeugkarosserie 10 für den dritten Temperierschritt 20.6 abermals in die Temperiervorrichtung 104 gefördert, welche nun als Füller-Trockner 20.6-1 dient.

Dann wird die Fahrzeugkarosserie 10 für den zweiten Funktionsschritt 20.7 ein zweites Mal in die Audit/Schleif-Vorrichtung 106, die nun als Audit/Schleif-Einrichtung 20.7-1 arbeitet.

Für den dritten Applikationsschritt 20.8 wird die Fahrzeugkarosserie 10 auf dem Transportwagen 28 zur Basislack(BC)-Lackiereinrichtung 20.8-1 gefördert und anschließend für den vierten Temperierschritt 20.9 ein viertes Mal in die Temperiervorrichtung 104 gefahren, die in diesem Fall folglich als BC-Trockner 20.9-1 wirkt. Der vierte Applikationsschritt 20.10 wird nunmehr in der Decklack(CC)-Lackiereinrichtung 20.10-1 durchgeführt, worauf die Fahrzeugkarosserie 10 für den fünften Temperierschritt 20.11 ein fünftes Mal durch die Temperiervorrichtung 104 geführt wird; diese erfüllt nun also die Funktion des CC-Trockners 20.11-1.

Bevor die Fahrzeugkarosserie 10 nun mittels der Übergabeeinrichtung 26 an die Montageanlage 18 übergeben wird, kann sie im dritten Funktionsschritt 20.12 ein zweites Mal in der Speichervorrichtung 108 zwischengelagert werden, welche in diesem Fall die Funktion des Speichers 20.12-1 übernimmt.

Bei einer Abwandlung werden die Applikationsschritte 20.3 (PVC/NAD), 20.5 (Füller), 20.8 (BC) und 20.10 (CC) in einer einzigen, entsprechend flexibel betreibbaren Multifunktions-Applikationsvorrichtung 110 durchgeführt, welche dann entsprechend die Funktionen der Applikations- und Lackiereinrichtungen 20.3-1, 20.3-2, 20.5-1, 20.8-1, und 20.10-1 erfüllt und welche dann entsprechend mehrfach von einer Fahrzeugkarosserie 10 durchfahren wird.

Die Multifunktions-Applikationsvorrichtung 110 ist in Figur 7 als gestricheltes Rechteck angedeutet, welches die Behandlungseinrichtungen 20.3-1, 20.3-2, 20.5-1, 20.8-1, und 20.10-1 einhüllt.

Bei einer Abwandlung kann die Multifunktions-Applikationsvorrichtung 110 die einzelnen Applikations- und Lackiereinrichtungen 20.3-1, 20.3-2, 20.5-1, 20.8-1, und 20.10-1 in einem gemeinsamen Gehäuse unterbringen, die dann gegebenenfalls auch als Batch-Kabine und nicht als Durchlaufkabine ausgebildet sein können. Die einzelnen Applikations- und Lackiereinrichtungen 20.3-1, 20.3-2, 20.5-1, 20.8-1, und 20.10-1 können dann entlang eines Förderweges angeordnet sein, der an den Applikations- und Lackiereinrichtungen 20.3-1, 20.3-2, 20.5-1, 20.8-1, und 20.10-1 vorbeiführt und von welchem die Transportwagen 22 dann in die geforderte Applikations- und Lackiereinrichtung 20.3-1, 20.3-2, 20.5-1, 20.8-1 oder 20.10-1 einfahren.

Um den für eine Fahrzeugkarosserie 10 spezifischen Ablauf zu koordinieren, führt jede Fahrzeugkarosserie 10 beispielsweise einen Datenspeicher mit sich, auf dem die Produkteigenschaften und die durchzuführenden Arbeitsschritte abgelegt sind. Diese Daten können von dem Transportwagen 28 ausgelesen werden, auf dem die Fahrzeugkarosserie 10 befestigt wird, wozu eine entsprechende Datentransfer/Speichereinheit von jedem Transportwagen 28 mitgeführt wird.

Der Transportwagen 28 kann direkt mit der jeweils anzufahrenden Behandlungseinrichtung 20.i-j für einen bestimmten Arbeitsschritt 20.i kommunizieren. Bei einer Applikationseinrichtung 20.i wird die Einrichtung anhand der vom Transportwagen 28 übermittelten Daten mit dem entsprechenden Beschichtungsmaterial versorgt; zudem erhalten bei einer Lackierkabine 90 beispielsweise die Lackierroboter 92 ihr Applikationsprogramm, welches den Bewegungsablauf der Lackierroboter 92 und die Applikationsparameter für den Applikationsvorgang festlegt.

Die Verwendung des fahrerlosen Transportsystem 22 erlaubt vor allem die Einbindung der Anlagensysteme und deren Steuerung in das Konzept Industrie 4.0, bei welchem industrielle Produktionsvorgänge mit modernen Informations- und Kommunikationstechniken verknüpft werden sollen. Das fahrerlose Transportsystem 22 erlaubt eine hohe Flexibilität beim Prozessablauf, auch Änderungen der Abläufe für eine bestimmte Fahrzeugkarosserie 10 oder Änderungen in der Reihenfolge der Behandlungen verschiedener Fahrzeugkarosserien 10 sind auf Grund der Variabilität in der Wegführung der Transportwagen 28 möglich.

Die Anordnung der jeweiligen Behandlungseinrichtungen 20.i-j kann weitgehend beliebig erfolgen; dabei kann die Positionierung der Behandlungseinrichtungen 20.i-j in einer Anlage insbesondere an deren Infrastruktur bezogen auf die benötigten und in der Anlage angebotenen Medien wie Lacke, Wasser, Luft und dergleichen oder auf benötigte Anlagenteile wie beispielsweise Komponenten für den Lufthaushalt oder für eine Hochspannungserzeugung und dergleichen abgestimmt werden.

## Patentansprüche

1. Verfahren zur Herstellung von Fahrzeugen, bei welchem
Fahrzeugkarosserien (10) für die Durchführung von mehreren Arbeitsschritten (12.i, 14.i, 18.i, 20.i) durch mehrere Behandlungseinrichtungen (20.i-j; 66, 66', 66") gefördert werden, wobei bei zwei aufeinanderfolgenden Arbeitsschritten (12.i, 12.i+1; 14.i, 14.i+1; 18.i, 18.i+1; 20.i, 20.i+1) Arbeiten unterschiedlicher Art an den Fahrzeugkarosserien (10) durchgeführt werden,
**dadurch gekennzeichnet, dass**
die Fahrzeugkarosserien (10) mindestens von einer Korrosionsschutzbehandlung bis zu einer Endmontage in einer Oberflächenbehandlungsanlage (16) zur Oberflächenbehandlung der Fahrzeugkarosserien (10) zumindest bereichsweise mit einem fahrerlosen Transportsystem (22) gefördert werden, welches eine Vielzahl von flurgebundenen Transportwagen (28) umfasst, die auf einem Fahrboden (30) fahren und die jeweils ein eigenes Antriebssystem (40) mit sich führen und unabhängig voneinander angetrieben und verfahren werden.

2. Verfahren nach Anspruch 1, **dadurch gekennzeichnet, dass** die Fahrzeugkarosserien (10) bei allen Arbeitsschritten (20.i), die in der Oberflächenbehandlungsanlage (16) durchgeführt werden, mittels des fahrerlosen Transportsystems (22) gefördert werden.

3. Verfahren nach Anspruch 1 oder 2, **dadurch gekennzeichnet, dass** Fahrzeugkarosserien (10) in einer Rohbauanlage (12) und/oder in einer Korrosionsschutzanlage (14) und/oder in einer Montageanlage (18) mit demselben fahrerlosen Fördersystem (22) gefördert werden, wie in der Oberflächenbehandlungsanlage (16).

4. Verfahren nach einem der Ansprüche 1 bis 3, **dadurch gekennzeichnet, dass** Transportwagen (28) verwendet werden, welche ein Transportwagen-Fahrwerk (36) und eine Befestigungseinrichtung (32) für zumindest eine Fahrzeugkarosserie (10) umfassen, die mittels einer Verbindungseinrichtung (38) miteinander gekoppelt sind.

5. Verfahren nach Anspruch 4, **dadurch gekennzeichnet, dass** die Fahrzeugkarosserien (10) für die Durchführung wenigstens eines Arbeitsschrittes (12.i, 14.i, 18.i, 20.i) durch wenigstens eine Behandlungseinrichtung (20.i-j; 66, 66', 66") gefördert werden, welche ein Gehäuse (68) umfasst, in dem ein Behandlungstunnel (70) untergebracht ist, und welche einen von dem Behandlungstunnel (70) getrennten Fahrraum (80) für das Transportwagen-Fahrwerk (36) umfasst, wobei der Behandlungstunnel (70) und der Fahrraum (80) derart durch einen Verbindungsdurchgang (78) miteinander verbunden sind, dass das Transportwagen-Fahrwerk (36) im Fahrraum (80) bewegt wird, wobei die Befestigungseinrichtung (32) im Behandlungstunnel (70) mitgeführt wird und sich die Verbindungseinrichtung (38) durch den Verbindungsdurchgang (78) hindurch erstreckt.

6. Verfahren nach Anspruch 5, **dadurch gekennzeichnet, dass** wenigstens eine Behandlungseinrichtung (20.i-j; 66) verwendet wird, die einen Tunnelboden (88) mit dem Verbindungsdurchgang (78) aufweist und bei welcher der Fahrraum (80) unterhalb des Behandlungstunnels (70) angeordnet ist.

7. Verfahren nach Anspruch 5 oder 6, **dadurch gekennzeichnet, dass** wenigstens eine Behandlungseinrichtung (20.i-j, 66', 66") verwendet wird, bei welcher im Behandlungstunnel (70) ein Fahrraumgehäuse (86) untergebracht ist, welches den Fahrraum (80) zumindest bereichsweise innerhalb des Behandlungstunnels (70) begrenzt und welches den Verbindungsdurchgang (78) aufweist.

8. Verfahren nach Anspruch 7, **dadurch gekennzeichnet, dass** wenigstens eine Behandlungseinrichtung (20.i-j, 66') verwendet wird, bei welcher das Fahrraumgehäuse (86) eine thermische Isolationseinrichtung (88) bereitstellt.

9. Verfahren nach einem der Ansprüche 1 bis 8, **dadurch gekennzeichnet, dass** Transportwagen (28) verwendet werden, die ein omnidirektionales Antriebssystem (40) haben, mit dem die Transportwagen (28) aus dem Stand heraus in eine beliebige Richtung fahren können.

10. Oberflächenbehandlungsanlage zur Oberflächenbehandlung von Fahrzeugkarosserien (10) mit mehreren Behandlungseinrichtungen (20.i-j; 66, 66', 66'), **dadurch gekennzeichnet, dass**
ein fahrerloses Transportsystem (22) vorgesehen ist, welches eine Vielzahl von flurgebundenen Transportwagen (28) umfasst, an welchen jeweils eine Fahrzeugkarosserie (10) befestigbar ist und welche auf einem Fahrboden (30) fahren, wobei die Transportwagen (28) jeweils ein eigenes Antriebssystem (40) mit sich führen und unabhängig voneinander antreibbar und verfahrbar sind.

11. Oberflächenbehandlungsanlage nach Anspruch 10, **dadurch gekennzeichnet, dass** jeder Transportwagen (28) ein Transportwagen-Fahrwerk (36) und eine Befestigungseinrichtung (32) für zumindest eine Fahrzeugkarosserie (10) umfasst, die mittels einer Verbindungseinrichtung (38) miteinander gekoppelt sind.

12. Oberflächenbehandlungsanlage nach Anspruch 11, **dadurch gekennzeichnet, dass** die Fahrzeugkarosserien (10) für die Durchführung wenigstens eines Arbeitsschrittes (12.i, 14.i, 18.i, 20.i) mittels des Fördersystems (22) durch wenigstens eine Behandlungseinrichtung (20.i-j; 66, 66', 66") förderbar sind, wobei die Behandlungseinrichtung (20.i-j, 66, 66', 66") ein Gehäuse (68) umfasst, in dem ein Behandlungstunnel (70) untergebracht ist, und welche einen von dem Behandlungstunnel (70) getrennten Fahrraum (80) für das Transportwagen-Fahrwerk (36) umfasst, wobei der Behandlungstunnel (70) und der Fahrraum (80) derart durch einen Verbindungsdurchgang (78) miteinander verbunden sind, dass das Transportwagen-Fahrwerk (36) im Fahrraum (80) bewegbar ist, wobei die Befestigungseinrichtung (32) im Behandlungstunnel (70) mitgeführt wird und sich die Verbindungseinrichtung (38) durch den Verbindungsdurchgang (78) hindurch erstreckt.

13. Oberflächenbehandlungsanlage nach Anspruch 12, **dadurch gekennzeichnet, dass** wenigstens eine Behandlungseinrichtung (20.i-j; 66) einen Tunnelboden (88) mit dem Verbindungsdurchgang (78) aufweist, wobei der Fahrraum (80) unterhalb des Behandlungstunnels (70) angeordnet ist.

14. Oberflächenbehandlungsanlage nach Anspruch 12 oder 13, **dadurch gekennzeichnet, dass** bei wenigstens einer Behandlungseinrichtung (20.i-j, 66', 66") ein Fahrraumgehäuse (86) im Behandlungstunnel (70) untergebracht ist, welches den Fahrraum (80) zumindest bereichsweise innerhalb des Behandlungstunnels (70) begrenzt und welches den Verbindungsdurchgang (78) aufweist.

15. Oberflächenbehandlungsanlage nach Anspruch 14, **dadurch gekennzeichnet, dass** das Fahrraumgehäuse (86) bei wenigstens einer Behandlungseinrichtung (20.i-j, 66') eine thermische Isolationseinrichtung (88) bereitstellt.

16. Oberflächenbehandlungsanlage nach einem der Ansprüche 1 bis 15, **dadurch gekennzeichnet, dass** die Transportwagen (28) ein omnidirektionales Antriebssystem (40) haben, mit dem die Transportwagen (28) aus dem Stand heraus in eine beliebige Richtung fahren können.

17. Fertigungsanlage zur Herstellung von Fahrzeugen mit einer Oberflächenbehandlungsanlage (16),
**dadurch gekennzeichnet, dass**
die Oberflächenbehandlungsanlage (16) eine Oberflächenbehandlungsanlage (16) nach einem der Ansprüche 10 bis 16 ist.

18. Fertigungsanlage nach Anspruch 17, **dadurch gekennzeichnet, dass** außerdem in einer Rohbauanlage (12) und/oder einer Korrosionsschutzanlage (14) und/oder einer Endmontageanlage (18) dasselbe fahrerlose Fördersystem (22) für die Fahrzeugkarosserien (10) vorhanden ist, wie in der Oberflächenbehandlungsanlage (16).

## Claims

1. Method for the manufacturing of vehicles, in which
vehicle bodies (10) are conveyed through a plurality of treatment installations (20.i-j; 66, 66', 66") for performing a plurality of work steps (12.i, 14.i, 18.i, 20.i), wherein work of a different kind is performed on the vehicle bodies (10) in two successive work steps (12.i, 12.i+1; 14.i, 14.i+1; 18.i, 18.i+1; 20.i, 20.i+1),
**characterized in that**
the vehicle bodies (10) are conveyed at least from a corrosion protection treatment to a final assembly in a surface treatment plant (16) for the surface treatment of the vehicle bodies (10) at least region-wise with a driverless transport system (22), which comprises a plurality of floor-bound transport carriages (28), which travel on a travel floor (30) and which each carry their own drive system (40) with them and are driven and moved independently of one another.

2. Method according to claim 1, **characterized in that** the vehicle bodies (10) are conveyed by means of the driverless transport system (22) during all work steps (20.i) performed in the surface treatment plant (16).

3. Method according to claim 1 or 2, **characterized in that** vehicle bodies (10) are conveyed in a body-in-white plant (12) and/or in a corrosion protection plant (14) and/or in an assembly plant (18) with the same driverless conveyor system (22) as in the surface treatment plant (16).

4. Method according to one of claims 1 to 3, **characterized in that** transport carriages (28) are used, which comprise a transport carriage chassis (36) and a fastening installation (32) for at least one vehicle body (10), which are coupled to one another by means of a connection installation (38).

5. Method according to claim 4, **characterized in that** the vehicle bodies (10), for performing at least one work step (12.i, 14.i, 18.i, 20.i), are conveyed through at least one treatment installation (20.i-j; 66, 66', 66"), which comprises a housing (68), in which a treatment tunnel (70) is arranged, and which comprises a travel space (80), which is separate from the treatment tunnel (70), for the transport carriage chassis (36), wherein the treatment tunnel (70) and the travel space (80) are connected to one another by a connection passage (78) such that the transport carriage chassis (36) is moved in the travel space (80), wherein the fastening installation (32) is carried along in the treatment tunnel (70) and the connection installation (38) extends through the connection passage (78).

6. Method according to claim 5, **characterized in that** at least one treatment installation (20.i-j; 66) is used, which comprises a tunnel floor (88) with the connection passage (78) and in which the travel space (80) is arranged below the treatment tunnel (70).

7. Method according to claim 5 or 6, **characterized in that** at least one treatment installation (20.i-j, 66', 66") is used, in which a travel space housing (86) is arranged in the treatment tunnel (70), wherein the travel space housing (86) bounds the travel space (80) at least region-wise within the treatment tunnel (70) and comprises the connection passage (78).

8. Method according to claim 7, **characterized in that** at least one treatment installation (20.i-j, 66') is used, in which the travel space housing (86) provides a thermal insulation installation (88).

9. Method according to one of claims 1 to 8, **characterized in that** transport carriages (28) are used, which have an omnidirectional drive system (40), with which the transport carriages (28) can travel in any direction from a standstill.

10. Surface treatment plant for the surface treatment of vehicle bodies (10) with a plurality of treatment installations (20.i-j; 66, 66', 66'),
**characterized in that**
a driverless transport system (22) is provided, which comprises a plurality of floor-bound transport carriages (28), to each of which a vehicle body (10) can be fastened and which travel on a travel floor (30), wherein the transport carriages (28) each carry their own drive system (40) with them and can be driven and moved independently of one another.

11. Surface treatment plant according to claim 10, **characterized in that** each transport carriage (28) comprises a transport carriage chassis (36) and a fastening installation (32) for at least one vehicle body (10), which are coupled to one another by means of a connection installation (38).

12. Surface treatment plant according to claim 11, **characterized in that** the vehicle bodies (10), for performing at least one work step (12.i, 14.i, 18.i, 20.i), can be conveyed by means of the conveying system (22) through at least one treatment installation (20.i-j; 66, 66', 66"), wherein the treatment installation (20.i-j, 66, 66', 66") comprises a housing (68), in which a treatment tunnel (70) is arranged, and comprises a travel space (80), which is separate from the treatment tunnel (70), for the transport carriage chassis (36), wherein the treatment tunnel (70) and the travel space (80) are connected to one another by a connection passage (78) such that the transport carriage chassis (36) can be moved in the travel space (80), wherein the fastening installation (32) is carried along in the treatment tunnel (70) and the connection installation (38) extends through the connection passage (78).

13. Surface treatment plant according to claim 12, **characterized in that** at least one treatment installation (20.i-j; 66) comprises a tunnel floor (88) with the connection passage (78), wherein the travel space (80) is arranged below the treatment tunnel (70).

14. Surface treatment plant according to claim 12 or 13, **characterized in that** for at least one treatment installation (20.i-j, 66', 66"), a travel space housing (86) is arranged in the treatment tunnel (70), wherein the travel space housing (86) bounds the travel space (80) at least region-wise within the treatment tunnel (70) and comprises the connection passage (78).

15. Surface treatment plant according to claim 14, **characterized in that**, for at least one treatment installation (20.i-j, 66'), the travel space housing (86) provides a thermal insulation installation (88)

16. Surface treatment plant according to one of claims 1 to 15, **characterized in that** the transport carriages (28) have an omnidirectional drive system (40), with which the transport carriages (28) can travel in any direction from a standstill.

17. Production plant for the manufacturing of vehicles with a surface treatment plant (16),
**characterized in that**
the surface treatment plant (16) is a surface treatment plant (16) according to one of claims 10 to 16.

18. Production plant according to claim 17, **characterized in that** furthermore the same driverless conveyor system (22) for the vehicle bodies (10) as in the surface treatment plant (16) is present in a body-in-white plant (12) and/or in a corrosion protection plant (14) and/or in a final assembly plant (18).

## Revendications

1. Procédé de fabrication de véhicules, lors duquel
des carrosseries de véhicule (10) sont acheminées pour la réalisation de plusieurs étapes de travail (12.i, 14.i, 18.i, 20.i) par plusieurs dispositifs de traitement (20i-j ; 66, 66', 66"), dans lequel dans le cas de deux étapes de travail successives (12.i, 12.i+1 ; 14.i, 14.i+1 ; 18.i, 18.i+1 ; 20.i, 20.i+1), des travaux de différent type sont réalisés sur les carrosseries de véhicule (10),
**caractérisé en ce que**
les carrosseries de véhicule (10) sont acheminées au moins d'un traitement de protection contre la corrosion à un montage final dans une installation de traitement de surface (16) pour le traitement de surface des carrosseries de véhicule (10) au moins par régions avec un système de transport sans conducteur (22), qui comprend une pluralité de wagons de transport liés au sol (28), qui se déplacent sur un sol de déplacement (30) et qui emmènent avec eux chacun leur propre système d'entraînement (40), et sont entraînés et déplacés indépendamment l'un de l'autre.

2. Procédé selon la revendication 1, **caractérisé en ce que** les carrosseries de véhicule (10) sont acheminées au moyen du système de transport sans conducteur (22) dans le cas de toutes les étapes de travail (20.i) qui sont réalisées dans l'installation de traitement de surface (16).

3. Procédé selon la revendication 1 ou 2, **caractérisé en ce que** des carrosseries de véhicule (10) sont acheminées dans une installation de caisse de carrosserie (12) et/ou dans une installation de protection contre la corrosion (14) et/ou dans une installation de montage (18) avec le même système d'acheminement sans conducteur (22) que dans l'installation de traitement de surface (16).

4. Procédé selon une des revendications 1 à 3, **caractérisé en ce que** des wagons de transport (28) qui comprennent un mécanisme de roulement de wagon de transport (36) et un dispositif de fixation (32) pour au moins une carrosserie de véhicule (10), qui sont couplés l'un à l'autre au moyen d'un dispositif de connexion (38), sont utilisés.

5. Procédé selon la revendication 4, **caractérisé en ce que** les carrosseries de véhicule (10) sont acheminées pour la réalisation d'au moins une étape de travail (12.i, 14.i, 18.i, 20.i) par au moins un dispositif de traitement (20i-j ; 66, 66', 66"), qui comprend un logement (68) dans lequel un tunnel de traitement (70) est logé et qui comprend un espace de déplacement (80) pour le mécanisme de roulement de wagon de transport (36) séparé du tunnel de traitement (70), dans lequel le tunnel de traitement (70) et l'espace de déplacement (80) sont connectés l'un à l'autre par un passage de connexion (78) de telle sorte que le mécanisme de roulement de wagon de transport (36) est déplacé dans l'espace de déplacement (80), dans lequel le dispositif de fixation (32) est entraîné dans le tunnel de traitement (70) et le dispositif de connexion (38) s'étend à travers le passage de connexion (78).

6. Procédé selon la revendication 5, **caractérisé en ce qu'**au moins un dispositif de traitement (20i-j ; 66) qui présente un fond de tunnel (88) avec le passage de connexion (78) et pour lequel l'espace de déplacement (80) est disposé en dessous du tunnel de traitement (70) est utilisé.

7. Procédé selon la revendication 5 ou 6, **caractérisé en ce qu'**au moins un dispositif de traitement (20i-j ; 66', 66") pour lequel un logement d'espace de déplacement (86) est logé dans le tunnel de traitement (70) est utilisé, lequel limite l'espace de déplacement (80) au moins par régions au sein du tunnel de traitement (70) et lequel présente le passage de connexion (78).

8. Procédé selon la revendication 7, **caractérisé en ce qu'**au moins un dispositif de traitement (20i-j, 66') pour lequel le logement d'espace de déplacement (86) met à disposition un dispositif d'isolation thermique (88) est utilisé.

9. Procédé selon une des revendications 1 à 8, **caractérisé en ce que** des wagons de transport (28) qui ont un système d'entraînement omnidirectionnel (40) avec lequel les wagons de transport (28) peuvent se déplacer à partir de l'arrêt dans une direction quelconque sont utilisés.

10. Installation de traitement de surface pour le traitement de surface de carrosseries de véhicule (10) avec plusieurs dispositifs de traitement (20i-j ; 66, 66', 66'), **caractérisée en ce que**
un système de transport sans conducteur (22) est prévu, lequel comprend une pluralité de wagons de transport liés au sol (28) sur lesquels une carrosserie de véhicule (10) peut à chaque fois être fixée et qui se déplacent sur un sol de déplacement (30), dans laquelle les wagons de transport (28) emmènent avec eux chacun leur propre système d'entraînement (40), et peuvent être entraînés et déplacés indépendamment l'un de l'autre.

11. Installation de traitement de surface selon la revendication 10, **caractérisée en ce que** chaque wagon de transport (28) comprend un mécanisme de roulement de wagon de transport (36) et un dispositif de fixation (32) pour au moins une carrosserie de véhicule (10) qui sont couplés l'un à l'autre au moyen d'un dispositif de connexion (38).

12. Installation de traitement de surface selon la revendication 11, **caractérisée en ce que** les carrosseries de véhicule (10) peuvent être acheminées pour la réalisation d'au moins une étape de travail (12.i, 14.i, 18.i, 20.i) au moyen du système d'acheminement (22) par au moins un dispositif de traitement (20i-j ; 66, 66', 66"), dans laquelle le dispositif de traitement (20i-j, 66, 66', 66") comprend un logement (68) dans lequel un tunnel de traitement (70) est logé, et qui comprend un espace de déplacement (80) pour le mécanisme de roulement de wagon de transport (36) séparé du tunnel de traitement (70), dans laquelle le tunnel de traitement (70) et l'espace de déplacement (80) sont connectés l'un à l'autre par un passage de connexion (78) de telle sorte que le mécanisme de roulement de wagon de transport (36) peut être déplacé dans l'espace de déplacement (80), dans laquelle le dispositif de fixation (32) est entraîné dans le tunnel de traitement (70) et le dispositif de connexion (38) s'étend à travers le passage de connexion (78).

13. Installation de traitement de surface selon la revendication 12, **caractérisée en ce qu'**au moins un dispositif de traitement (20i-j ; 66) présente un fond de tunnel (88) avec le passage de connexion (78), dans laquelle l'espace de déplacement (80) est disposé en dessous du tunnel de traitement (70).

14. Installation de traitement de surface selon la revendication 12 ou 13, **caractérisée en ce que** dans le cas d'au moins un dispositif de traitement (20i-j, 66', 66"), un logement d'espace de déplacement (86) est logé dans le tunnel de traitement (70), lequel limite l'espace de déplacement (80) au moins par régions au sein du tunnel de traitement (70) et lequel présente le passage de connexion (78).

15. Installation de traitement de surface selon la revendication 14, **caractérisée en ce que** le logement d'espace de déplacement (86) met à disposition dans le cas d'au moins un dispositif de traitement (20i-j, 66') un dispositif d'isolation thermique (88).

16. Installation de traitement de surface selon une des revendications 1 à 15, **caractérisée en ce que** les wagons de transport (28) ont un système d'entraînement omnidirectionnel (40) avec lequel les wagons de transport (28) peuvent se déplacer à partir de l'arrêt dans une direction quelconque.

17. Installation de production pour la fabrication de véhicules avec une installation de traitement de surface (16),
**caractérisée en ce que**
l'installation de traitement de surface (16) est une installation de traitement de surface (16) selon une des revendications 10 à 16.

18. Installation de production selon la revendication 17, **caractérisée en ce que** le même système d'acheminement sans conducteur (22) pour les carrosseries de véhicule (10) est présent en outre dans une installation de caisse de carrosserie (12) et/ou une installation de protection contre la corrosion (14) et/ou une installation de montage final (18) que dans l'installation de traitement de surface (16).
